# EUROPÄISCHE PATENTSCHRIFT

(11) **EP 2 025 908 B1**
(45) Veröffentlichungstag und Bekanntmachung des Hinweises auf die Patenterteilung: **21.01.2015**
(21) Anmeldenummer: 08010148.8
(22) Anmeldetag: 04.06.2008
(51) Int. Cl.: F02K 9/70, F02K 9/95

(54) **Anzündvorrichtung**
Ignition device
Dispositif d'allumage

(30) Priorität: 04.08.2007 DE 102007036881
(43) Veröffentlichungstag der Anmeldung: 18.02.2009
(73) Patentinhaber: Bayern-Chemie Gesellschaft für flugchemische Antriebe mbH, 84544 Aschau a. Inn (DE)
(72) Erfinder: Ramsel, Jürgen, 84559 Kraiburg (DE); Stierle, Ralf, 83533 Edling (DE); Naumannl, Karl Wieland, 84453 Mühldorf (DE)
(74) Vertreter: vP-IP von Puttkamer Berngruber Loth Spuhler

(56) Entgegenhaltungen:
- EP-A2- 1 321 505
- WO-A1-95/30084
- DE-A1- 2 120 210
- DE-A1- 2 128 243
- DE-A1-102005 030 437

## Beschreibung

Zum Anzünden der fließfähigen, also flüssigen oder gelförmigen Treibstoffe eines Raketenmotors werden Zündkerzen, Anzünder in Form kleiner Feststoffraketen, sogenannte "Mini-Rockets", ferner Gasbrenner sowie Anzündsäckchen, also mit einer Anzündmischung gefüllte Säckchen z. B. aus Kunststoff oder Gewebe, verwendet.

Ein mit gelförmigen Treibstoff betriebener Raketenmotor ist z.B. aus DE 10 2005 030 437 A1 bekannt.

Zündkerzen- weisen einen zu geringen Energieeintrag auf, um schwer zündfähige Treibstoffe anzuzünden. Anzünder in der Bauweise von "Mini-Rockets" benötigen eine der Brennkammer vorgeordnete, meist verdämmte kleinere Vorkammer, um den für das Anzünden anzündträger Treibstoffe erforderlichen Mindestzünddruck aufzubauen. In den Raketenmotor integrierte Gasbrenner erfordern einen erheblichen Aufwand und sind zudem für Anwendungen mit Massenbeschränkung ungeeignet. Anzündsäckchen weisen eine zu kurze Brennzeit auf, um den für die Anzündung erforderlichen Mindestzünddruck für anzündträge Treibstoffe lange genug aufrecht zu erhalten.

Aufgabe der Erfindung ist es daher, eine zuverlässige, einfach aufgebaute Brennkammer mit Anzündvorrichtung geringer Masse insbesondere für anzündträge, insbesondere gelförmige Treibstoffe bereitzustellen.

Dies wird erfindungsgemäß mit der im Anspruch 1 gekennzeichneten Brennkammer mit Anzündvorrichtung erreicht. In den Unteransprüchen sind vorteilhafte Ausgestaltungen der Erfindung wiedergegeben.

Die erfindungsgemäße Brennkammer mit Anzündvorrichtung weist eine Primäranzündladung und einen in der Brennkammer des Raketenmotors angeordneten Festtreibstoff auf.

Die Primäranzündladung besteht vorzugsweise aus einer Anzündpille und einer pyrotechnischen Übertragungsladung. Statt der Anzündpille kann auch ein anderes Mittel zur Initiierung der Übertragungsladung vorgesehen sein.

Die Anzündpille kann z. B. mit einem Kabel elektrisch initiiert werden. Die Initiierung kann jedoch auch mechanisch z. B. durch einen Schlagbolzen erfolgen.

Die pyrotechnische Übertragungsladung kann aus einem Anzündpulver, beispielsweise Schwarzpulver, einem Bor-Kalium-Nitrat-Gemisch oder dergleichen bestehen. Sie kann unverdämmt, aber auch verdämmt sein, also sich beispielsweise in einem Kunststoffbeutel befinden.

Die Primäranzündladung kann sich innerhalb der Brennkammer befinden, jedoch auch außerhalb beispielsweise an einer leicht zugänglichen Stelle, wie der Schubdüse des Raketenmotors, beispielsweise dann, wenn sie erst kurz vor dem Start eingebaut werden soll.

Der erfindungsgemäß in der Brennkammer vorgesehene Festtreibstoff für die Anzündvorrichtung kann ein üblicher Raketenfesttreibstoff sein.

Vorzugsweise ist der Festtreibstoff an der Brennkammerwand befestigt. Dazu kann er beispielsweise an die Brennkammerwand angegossen sein. Vorzugsweise werden jedoch Festtreibstoffblöcke verwendet, die mittels Kleber oder durch Halterungen an der Brennkammerwand befestigt sind. Da sie leicht herstellbar sind, werden vorzugsweise sich in Längsrichtung der Brennkammer erstreckende, leistenförmige Treibstoffblöcke eingesetzt, die an der Brennkammerwand in Umfangsrichtung verteilt befestigt sind.

Die erfindungsgemäße Brennkammer mit Anzündvorrichtung ist insbesondere zum Anzünden von fließfähigen anzündträgen, insbesondere gelförmigen Treibstoffen bestimmt. Der fließfähige anzündträge Treibstoff kann ein monergoler Treibstoff, z.B. Nitromethan oder Nitroethan sein.

Der gelförmige anzündträge Treibstoff kann durch einen Treibstoff auf Basis wenigstens eines bei Raumtemperatur flüssigen, wenigstens eine Nitro-Gruppe enthaltenden Kohlenwasserstoffs gebildet sein, der mit einem oder mehreren Gelbildnern versetzt ist und gegebenenfalls weitere Additive enthält.

Der die Nitro-Gruppe enthaltende Kohlenwasserstoff kann beispielsweise Nitromethan oder Nitroethan sein. Der Gelbildner kann beispielsweise ein anorganischer Gelbildner, wie pyrogene Kieselsäure, z. B. Aerosil® oder ein organischer Gelbildner, beispielsweise ein LMOG sein.

Dem die wenigstens eine Nitro-Gruppe enthaltenden Kohlenwasserstoff oder Kohlenwasserstoffen kann zudem ein Oxidator zugemischt sein. Der Oxidator kann einer der Gelbildner sein und in fester, dispergierter oder auch in flüssiger Form eingebracht werden.

Ein Triebwerk mit der erfindungsgemäßen Brennkammer mit Anzündvorrichtung kann auch mit zwei Komponenten: einem Treibstoff, vorzugsweise wie oben beschrieben, und einem Oxidator in flüssiger oder bevorzugt gelförmiger Konsistenz, betrieben werden.
Dazu kann als Oxidator ein wasserlösliches Salz, insbesondere Ammonium- oder Hydroxylammonium-Salz auf Nitramid- oder Nitrat-Basis verwendet werden, beispielsweise Ammoniumdinitramid oder Hydroxylammoniumnitrat, das in Wasser gelöst und bevorzugt mit Gelbildnern und gegebenenfalls Additiven versetzt wird. Anstelle in reinem Wasser kann das Salz z.B. auch in einem Gemisch aus Wasser und einem wasserlöslichen Lösungsmittel, Z.B. Alkohol, gelöst sein.

Ein derartiger anzündträger gelförmiger Treibstoff benötigt für die Anzündung eines Mindestanzünddruck, der beispielsweise mehr als 10 bar, insbesondere mehr als 30 bar betragen kann.

Der Mindestanzünddruck wird erfindungsgemäß mit dem Festtreibstoff in der Brennkammer aufgebaut. Das heißt, der zu verbrennende anzündträge fließfähige Treibstoff für den Antrieb des Raketenmotors wird in die Brennkammer bevorzugt dann eingespritzt, wenn der von der Primäranzündladung angezündete Festtreibstoff in der Brennkammer sicher brennt und damit der Druck in der Brennkammer den für eine sichere Verbrennung des fließfähigen Treibstoffs erforderlichen Mindestanzünddruck überschritten hat.

Der Raketenmotor kann auch so betrieben werden, das mindestens ein fließfähiger Treibstoff und mindestens ein fließfähiger Oxidator eingespritzt werden. Dabei kann der wenigstens eine fließfähige Treibstoff und/oder der wenigstens eine Oxidator ein Gel sein. Der gelförmige Treibstoff wird dabei vorzugsweise durch wenigstens einen Treibstoff auf der Basis wenigstens eines bei

Raumtemperatur flüssigen, wenigstens eine Nitro-Gruppe enthaltenen Kohlenwasserstoffs gebildet, insbesondere Nitromethan oder Nitroethan. Zusätzlich wird vorzugsweise ein vergelter Oxidator eingesetzt.

Nachstehend ist die Erfindung anhand der beigefügten Zeichnung beispielhaft näher erläutert. Darin zeigen jeweils schematisch:
Figur 1 und 2 einen Längsschnitt bzw. Querschnitt durch die Brennkammer eines Raketenmotors;
Figur 3 ein Diagramm des Druckverlaufs in der Brennkammer eines Raketenmotors beim Anzünden des fließfähigen Treibstoffs mit der erfindungsgemäßen Anzündvorrichtung; und
Figur 4 und 5 einen Längsschnitt bzw. Querschnitt durch eine Brennkammer mit einem Festtreibstoff, der einerseits einen zusätzlichen Antrieb des Raketenmotors und andererseits vor Beendigung des Abbrandes Festtreibstoffblöcke zur Anzündung des fließfähigen Treibstoffs des Raketenmotors bildet.

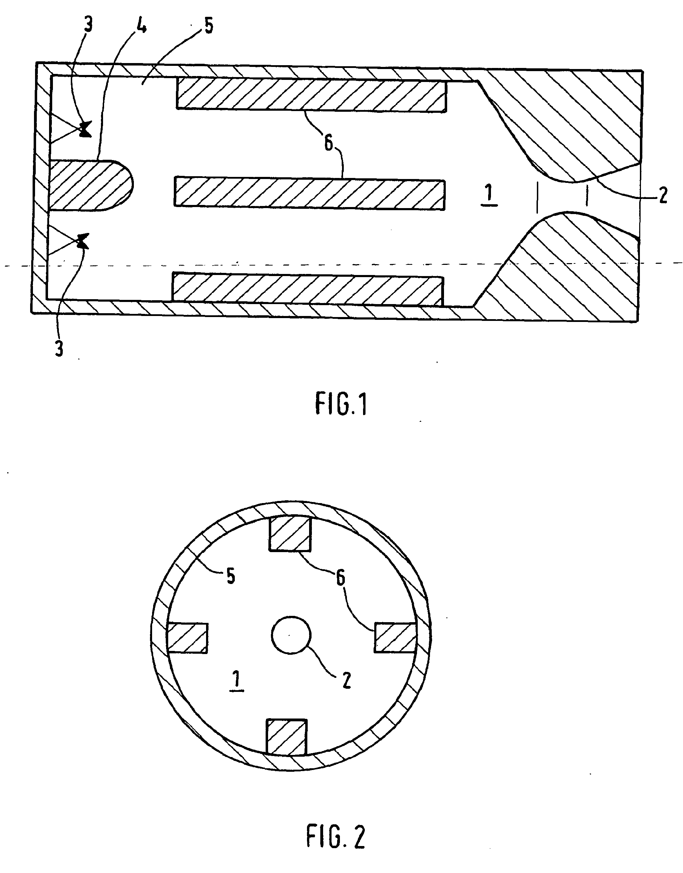

Gemäß Figur 1 und 2 weist die Brennkammer 1 an dem von ihrer Schubdüse 2 abgewandten, vorderen Ende Einspritzdüsen 3 für einen fließfähigen, insbesondere gelförmigen Treibstoff zum Antrieb des Raketenmotors auf.

Die Einspritzdüsen 3 sind um eine Primäranzündladung 4 verteilt angeordnet, die, was in der Zeichnung nicht näher dargestellt ist, aus einer z. B. elektrisch initiierbaren Anzündpille und einer pyrotechnischen Übertragungsladung bestehen kann.

Ferner sind in der Brennkammer 1 an der Brennkammerwand 5 sich in Brennkammerlängsrichtung erstreckende, stabförmige Festtreibstoffblöcke 6 um den Umfang verteilt angeordnet.

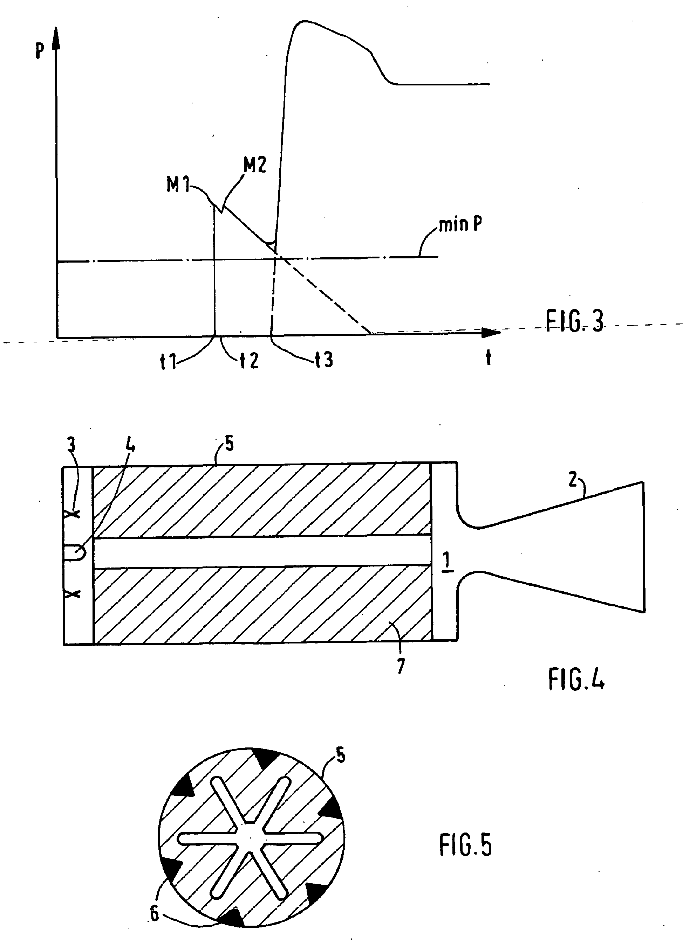

In Figur 3 ist der Verlauf des Drucks P in der Brennkammer 1 in Abhängigkeit von der Zeit t beim Anzünden eines durch die Einspritzdüsen 3 in die Brennkammer 1 gemäß Figur 1 und 2 eingespritzten fließfähigen Treibstoffs dargestellt.

Dabei stellt t1 den Zeitpunkt der Anzündung der Primäranzündladung 4 und t2 den Zeitpunkt der Anzündung der Festtreibstoffblöcke 6 dar. M1 ist die Druckspitze, die durch die Anzündung der Primäranzündladung 4 erreicht wird, und M2 die Druckspitze durch Anzündung der Festtreibstoffblöcke 6. Die strichpunktierte Linie minP stellt den Mindestanzünddruck dar, der erforderlich ist, um den durch die Einspritzdüsen 3 eingespritzten fließfähigen Treibstoff anzuzünden.

Wie aus Figur 3 ersichtlich, erfolgt die Einspritzung des fließfähigen Treibstoffs durch die Einspritzdüsen 3 im Zeitpunkt t3, also wenn der Brennkammerdruck P deutlich über dem Mindestanzünddruck minP liegt.

Bei der Ausführungsform nach Figur 4 und 5 ist in der Brennkammer 1 ein Festtreibstoffsatz 7 in Form eines Innensternbrenners vorgesehen. Der Treibsatz 7 ist dabei so ausgebildet, dass die den Brennstoffblöcken 6 (gemäß Figur 1 und 2) entsprechenden Festtreibstoffblöcke 6' erst gegen Ende des Abbrands des Treibsatzes 7 gebildet werden. Damit wird das Brennkammervolumen zur Schuberzeugung maximal genutzt. Statt in Form eines Innensternbrenners kann der Festtreibstoffsatz 7 auch eine andere Konfiguration aufweisen.

## Patentansprüche

1. Brennkammer mit Anzündvorrichtung für einen Raketenmotor, der mit wenigstens einem fließfähigen, anzündträgen Treibstoff betrieben wird, **dadurch gekennzeichnet, dass** die Anzündvorrichtung eine Primäranzündladung (4) und einen in der Brennkammer (1) des Raketenmotors angeordneten Festtreibstoff zur Anzündung des einspritzenden fließfähigen gelförmigen Treibstoffs aufweist.

2. Brennkammer nach Anspruch 1, **dadurch gekennzeichnet, dass** die Primäranzündladung (4) eine Anzündpille und eine pyrotechnische Übertragungsladung aufweist.

3. Brennkammer nach Anspruch 2, **dadurch gekennzeichnet, dass** die Anzündpille elektrisch initiierbar ist.

4. Brennkammer nach Anspruch 1, **dadurch gekennzeichnet, dass** die Primäranzündladung (4) in der Brennkammer (1) angeordnet ist.

5. Brennkammer nach Anspruch 1, **dadurch gekennzeichnet, dass** mit dem Festtreibstoff in der Brennkammer (1) ein Druck erzeugbar ist, der größer als der Mindestanzünddruck (minP) des fließfähigen Treibstoffs des Raketenmotors ist.

6. Brennkammer nach Anspruch 1, **dadurch gekennzeichnet, dass** der Festtreibstoff an der Brennkammerwand (5) befestigt ist.

7. Brennkammer nach Anspruch 6, **dadurch gekennzeichnet, dass** der Festtreibstoff durch wenigstens einen Festtreibstoffblock (6, 6') gebildet wird.

8. Brennkammer nach Anspruch 7, **dadurch gekennzeichnet, dass** sich der wenigstens eine Festtreibstoff-Block (6,6') in Längsrichtung der Brennkammer (1) erstreckt.

9. Brennkammer nach Anspruch 7 oder 8, **dadurch gekennzeichnet, dass** mehrere im Abstand angeordnete - - Festtreibstoffblocke (6, 6') vorgesehen sind.

10. Brennkammer nach einem der Ansprüche 6 bis 9, **dadurch gekennzeichnet, dass** in der Brennkammer (1) ein Feststofftreibsatz (7) angeordnet ist, der beim Abbrand den Feststreibstoff zur Anzündung des fließfähigen Treibstoffs bildet.

11. Brennkammer nach einem der vorstehenden Ansprüche, **dadurch gekennzeichnet, dass** dem wenigstens einen fließfähigen Treibstoff wenigstens ein Oxidator zugemischt ist.

12. Brennkammer nach einem der Ansprüche 1 bis 10, **dadurch gekennzeichnet, dass** der Raketenmotor durch ein Einspritzen wenigstens eines fließfähigen Treibstoffs und wenigstens eines fließfähigen Oxidators betrieben wird.

13. Brennkammer nach Anspruch 11 oder 12, **dadurch gekennzeichnet, dass** der Oxidator ein Gel ist.

14. Brennkammer nach Anspruch 1, **dadurch gekennzeichnet, dass** der gelförmige Treibstoff durch wenigstens einen Treibstoff auf der Basis wenigstens eines bei Raumtemperatur flüssigen, wenigstens eine Nitro-Gruppe enthaltenden Kohlenwasserstoffs und einen Gelbildner gebildet ist.

15. Brennkammer nach Anspruch 14, **dadurch gekennzeichnet, dass** dem die Nitro-Gruppe enthaltenden Kohlenwasserstoff ein Oxidator zugemischt ist.

16. Brennkammer nach einem der Ansprüche 10 bis 15, **dadurch gekennzeichnet, dass** ein Oxidator den Gelbildner bildet.

## Claims

1. A combustion chamber having an ignition device for a rocket motor being operated with at least one free-flowing propellant which is not easily ignitable, **characterized in that** the ignition device has a primary ignition charge (4) and a solid propellant arranged in the combustion chamber (1) of the rocket motor for igniting the free-flowing gel-type propellant injected.

2. The combustion chamber according to claim 1, **characterized in that** the primary ignition charge (4) has an ignition tablet and a pyrotechnic booster charge.

3. The combustion chamber according to claim 2, **characterized in that** the ignition tablet can be electrically initiated.

4. The combustion chamber according to claim 1, **characterized in that** primary ignition charge (4) is arranged in the combustion chamber (1).

5. The combustion chamber according to claim 1, **characterized in that** a pressure can be generated by the solid propellant in the combustion chamber (1) which is greater than the minimum ignition pressure (minP) of the free-flowing propellant of the rocket motor.

6. The combustion chamber according to claim 1, **characterized in that** the solid propellant is attached to the wall (5) of the combustion chamber (1).

7. The combustion chamber according to claim 6, **characterized in that** the solid propellant is formed by means of at least one solid propellant block (6, 6').

8. The combustion chamber according to claim 7, **characterized in that** the at least one solid propellant block (6, 6') extends in the longitudinal direction of the combustion chamber (1).

9. The combustion chamber according to claim 7 or 8, **characterized in that** a plurality of solid propellant blocks (6, 6') arranged at a distance from each other are provided.

10. The combustion chamber according to any of claims 6 to 9, **characterized in that** a solid propellant charge (7) is arranged in the combustion chamber (1) which, during combustion, forms the solid propellant for the ignition of the free-flowing propellant.

11. The combustion chamber according to any of the preceding claims, **characterized in that** at least one oxidizer is added to the at least one free-flowing propellant.

12. The combustion chamber according to any of claims 1 to 10, **characterized in that** the rocket motor is operated by injecting at least one free-flowing propellant and at least one free-flowing oxidizer.

13. The combustion chamber according to claim 11 or 12, **characterized in that** the oxidizer is a gel.

14. The combustion chamber according to claim 1, **characterized in that** the gel-type propellant is formed by at least one propellant based on at least one hydrocarbon being liquid at room temperature and containing at least one nitro group and by a gelling agent.

15. The combustion chamber according to claim 14, **characterized in that** an oxidizer is added to the hydrocarbon containing the nitro group.

16. The combustion chamber according to any of claims 10 to 15, **characterized in that** an oxidizer forms the gelling agent.

## Revendications

1. Chambre de combustion avec dispositif d'allumage pour un moteur de fusée qui fonctionne avec au moins un carburant fluide à allumage lent, **caractérisée en ce que** le dispositif d'allumage présente une charge d'allumage primaire (4) et un propergol agencé dans la chambre de combustion (1) du moteur de fusée pour allumer le carburant sous forme de gel fluide à injecter.

2. Chambre de combustion selon la revendication 1, **caractérisée en ce que** la charge d'allumage primaire (4) présente une pastille d'allumage et une charge de transmission pyrotechnique.

3. Chambre de combustion selon la revendication 2, **caractérisée en ce que** la pastille d'allumage peut être initiée de manière électrique.

4. Chambre de combustion selon la revendication 1, **caractérisée en ce que** la charge d'allumage primaire (4) est agencée dans la chambre de combustion.

5. Chambre de combustion selon la revendication 1, **caractérisée en ce qu'**avec le propergol dans la chambre de combustion (1) peut être générée une pression qui est supérieure à la pression d'allumage minimum (minP) du carburant fluide du moteur de fusée.

6. Chambre de combustion selon la revendication 1, **caractérisée en ce que** le propergol est fixé sur la paroi (5) de la chambre de combustion.

7. Chambre de combustion selon la revendication 6,-**caractérisée en ce que** le propergol est formé par au moins un bloc de propergol (6, 6').

8. Chambre de combustion selon la revendication 7, **caractérisée en ce qu'**au moins un bloc de propergol (6, 6') s'étend en direction longitudinale de la chambre de combustion (1).

9. Chambre de combustion selon la revendication 7 ou 8, **caractérisée en ce qu'**il est prévu plusieurs blocs de propergol (6, 6') agencés de manière espacée.

10. Chambre à combustion selon l'une des revendications 6 à 9, **caractérisée en ce que** dans la chambre de combustion (1) est agencée une charge de propulsion (7) qui, lors de la combustion, forme le propergol pour l'allumage du carburant fluide.

11. Chambre à combustion selon l'une des revendications précédentes, **caractérisée en ce qu'**au moins un oxydant est mélangé audit au moins carburant fluide.

12. Chambre à combustion selon l'une des revendications 1 à 10, **caractérisé en ce que** le moteur de fusée fonctionne par une injection d'au moins un carburant fluide et d'au moins un oxydant fluide.

13. Chambre à combustion selon la revendication 11 ou 12, **caractérisée en ce que** l'oxydant est un gel.

14. Chambre de combustion selon la revendication 1, **caractérisée en ce que** le carburant en forme de gel est formé par au moins un carburant à base d'au moins un hydrocarbure liquide à température ambiante contenant au moins un groupe nitro, et par un agent gélifiant.

15. Chambre de combustion selon la revendication 14, **caractérisée en ce qu'**un oxydant est mélangé à l'hydrocarbure contenant le groupe nitro.

16. Chambre de combustion selon l'une des revendications 10 à 15, **caractérisée en ce qu'**un oxydant forme l'agent gélifiant.
